# EUROPEAN PATENT SPECIFICATION

(11) **EP 1 658 701 B1**
(45) Date of publication and mention of the grant of the patent: **03.01.2007**
(21) Application number: 04775033.6
(22) Date of filing: 17.08.2004
(51) Int. Cl.: H04L 12/46, H04L 29/06

(54) **METHOD, SYSTEM AND MOBILE TERMINAL FOR ESTABLISHING A VPN CONNECTION**
VERFAHREN, SYSTEM UND MOBILES ENDGERÄT ZUR HERSTELLUNG EINER VPN-VERBINDUNG
PROCEDE, SYSTEME ET STATION MOBILE PERMETTANT D'ETABLIR UNE CONNEXION VPN

(30) Priority: 18.08.2003 NO 20033655
(43) Date of publication of application: 24.05.2006
(73) Proprietor: Telenor ASA, 1331 Fornebu (NO)
(72) Inventor: CALVET, Juan, Carlos López, N-0768 Oslo (NO)
(74) Representative: Briddes, Sam
(86) International application number: PCT/NO2004/000249
(87) International publication number: WO 2005/018168

(56) References cited:
- EP-A- 0 944 203
- DE-A- 10 140 446
- US-A1- 2003 070 067

## Description

### Field of the invention

The present invention relates in general to information security, and more specifically to a method for enabling a Virtual Private Network connection to be established in a communication network between a first and a second computer connected to the network.

In particular, a first mobile communication terminal is arranged for local communication with the first computer, and a second mobile communication terminal is arranged for local communication with the second computer, and the method according to the invention is performed by said second mobile terminal.

The invention also relates to a mobile communication terminal arranged for performing the method, and a system wherein a mobile communication terminal arranged for performing the method is included.

### Background of the invention

A Virtual Private Network (VPN) is a private network that makes use of the public network, including its telecommunication infrastructure. VPNs are widely used to enable mobile and remote users to connect to their company's internal LANs.

IPSec (Internet Protocol Security) has been a popular technique over the past years for providing VPNs. Using IPSec, security is achieved through the provision of a tunnelling protocol and security procedures.

In order to establish an IPSec VPN tunnel connection between two peer or client computers connected to the Internet, each computer must be in possession of certain configuration data, including the IP address of both computers and a shared secret, such as a random number or alphanumeric string. When such information is provided, each computer may perform a configuration process which results in that the VPN connection is established.

Public Key Infrastructure (PKI) is a secure method for exchanging information within an organization, an industry, a nation or worldwide. PKI uses the asymmetric encryption method, also known as the "public/private key" method, for encrypting IDs and documents/messages. A certificate authority (CA) issues digital certificates (digital IDs) that authenticate the identity of people and organizations over a public network such as the Internet.

The patent application US 2003/070067 (2003-04-10) discloses a method for establishing a secure connection between two mobile terminals. A server provides the calling terminal with a common key and with address information of the destination terminal. The calling terminal sends the key to the address provided by the server. Finally a secure correction between the two terminals is established using the common key. EP-A-0 944 203 (1999-09-22) discloses a method for establishing a secure connection between a mobile terminal and its home agent, wherein a security key is sent to the terminal using the GSM Short Message Service.

### Objects of the invention

An object of the present invention is to provide a method, a device and a system for enabling a Virtual Private Network connection to be established in a communication network between a first and a second computer connected to the network.

A further object of the invention is to provide such a method, a device and a system which is easy and cost-effective in implementation and use.

Another object of the invention is to provide such a method, a device and a system which utilizes existing infrastructure such as the widespread mobile telephony, as well as oncoming technologies such as the Bluetooth short-range communication.

Still another object of the invention is to provide a method, a device and a system that makes it simple for ordinary customers to establish VPN connections for facilitating new methods of e-commerce and on-line payment solutions.

### Summary of the invention

At least some of the objects stated above are achieved by means of a method, a mobile communication terminal and a system as set forth in the appended, independent claims. Further favorable advantages are obtained by means of the preferred embodiments as set forth in the dependent claims.

### Brief list of drawings

The invention will be described in further detail by way of example and with reference to the figures, wherein
Fig. 1 is a block diagram illustrating a system wherein a method according to the invention is used,
Fig. 2 is a timing diagram illustrating the complete process of establishing a VPN connection,
Fig. 3 is a flow chart illustrating a method according to the invention.

### Detailed description of a preferred embodiment

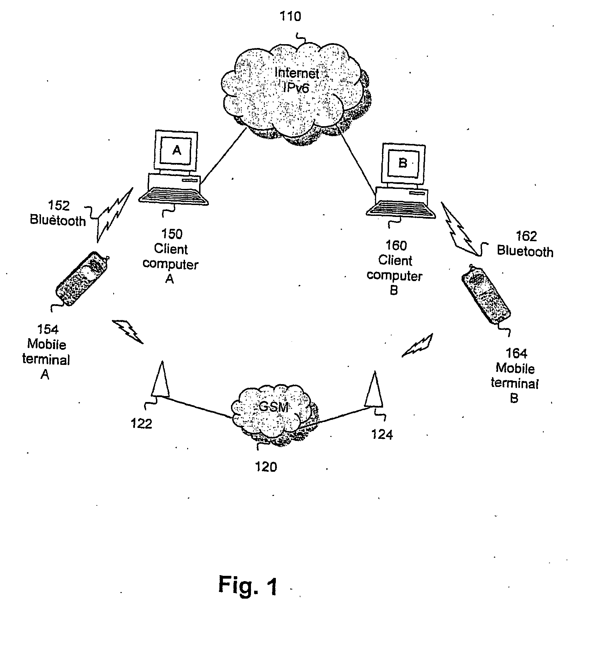

Fig. 1 is a block diagram illustrating a system wherein the method according to the invention is used.

A first client computer 150 (A) and a second client computer 160 (B) are operatively connected to a global digital communication network 110 such as the Internet.

The aim of the invention is to establish a VPN connection between A and B, i.e. between the first client computer 150 and the second client computer 160.

Each client computer 150, 160 is provided with an address (IP address) in the network 110. Each client computer 150, 160 is further provided with client software, such as an Internet browser, which enables the computer to access the World Wide Web. Also, each client computer 150, 160 is provided with a local communication interface, such as a Bluetooth RF transceiver, for local, short-range wireless communication with remote peripheral devices.

Bluetooth is a computing and telecommunications industry specification that describes how mobile phones, computers, and personal digital assistants (PDA's) can easily interconnect with each other using a local (short-range) wireless connection. A Bluetooth device is a microchip transceiver that transmits and receives in the frequency band of 2.45 GHz. Each device has a unique 48-bit address from the IEEE 802 standard. Connections can be point-to-point or multipoint. The maximum range is approx. 10 meters. A frequency hop scheme allows devices to communicate even in areas with a great deal of electromagnetic interference. Built-in functions for encryption and authentication are provided for the short-range Bluetooth communication.

Each client computer 150, 160 is further provided with software enabling the computer to communicate with the remote peripheral devices, using said local communication interface.

A first mobile terminal 154 is associated with the first client computer 150. The first mobile terminal 154 is provided with two independent communication options: Firstly, the mobile terminal 154 is provided with a communication interface for local communication with the first client computer 150, e.g. a Bluetooth RF transceiver. Secondly, the mobile terminal 154 is arranged to operate in a mobile telephone network 120, by radio communication with a base station 122 covering the current location of the mobile terminal 154. In particular, the mobile telephone network provides a message service, such as an SMS service, enabling the mobile terminal 154 to transmit a digital message to another mobile terminal operating in the mobile telephone network 120.

Likewise, a second mobile terminal 164 is associated with the first client computer 160 on the B side. The second mobile terminal 164 is also provided with two independent communication options: Firstly, the mobile terminal 164 is provided with a communication interface for local communication with the second client computer 160, e.g. a. Bluetooth RF transceiver. Secondly, the mobile terminal 164 is arranged to operate in the mobile telephone network 120, by radio communication with a base station 124 covering the current location of the mobile terminal 164. The message service, such as an SMS service, provided by the mobile telephone network 120, enables the mobile terminal 164 to transmit and receive digital messages to another mobile terminal operating in the network. Typically, the mobile telephone network 120 comprises a GSM network, and the mobile terminals are arranged to operate in the GSM network, which enables the terminals to send and receive SMS messages through the network 120.

Each of the first 154 and the second 164 mobile terminals comprises a SIM (Subscriber Identity Module) card.

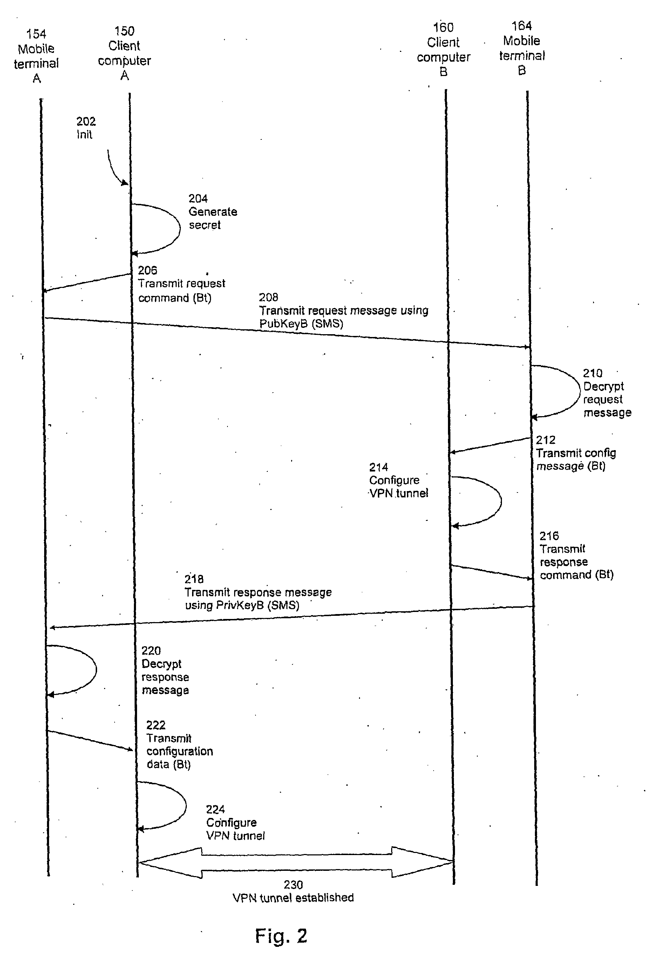

Fig. 2 is a timing diagram illustrating the complete process of enabling a VPN connection to be established between the first client computer 150 and the second client computer 160. For the purpose of illustration, the system shown in fig. 1 is also referred to when describing the process in fig. 2.

The following configuration information is needed at both client computers 150, 160 in order to enable the establishing of a VPN tunnel connection between the first 150 and the second 160 client computers:
(1) the IP address of both client computers, and
(2) a shared secret.

The further process of establishing a VPN connection or tunnel, based on such configuration data, will be a normal design procedure for a person skilled in the art, based on the teachings of the IPSec specification.

In the initial process step 202, a request is input by a user operating the first client computer 150. The request includes an identity of the second mobile terminal 164, such as a telephone number associated with it.

Then, in the secret generation step 204, a "shared secret", such as a pseudo-random number or alphanumeric string, is generated by the first client computer 150.

Subsequently, in the request command transmission step 206, the first client computer 150 transmits a request command through the first local Bluetooth connection 152 to the first mobile terminal 154. The built-in features of the Bluetooth communication ensure that the data is transmitted in encrypted form, which is essential for security/confidentiality. This command includes data representing the generated shared secret, the IP address of the first client computer 150 and the identity of the second mobile terminal 164, and the command instructs the first mobile terminal A to transmit a request message in the following step 208.

As a response to the receipt of the request command, the first mobile terminal is arranged to initiate the request message transmission step 208, wherein the first mobile terminal 154 transmits a request message, such as an SMS message, to the identified, second mobile terminal 164, through the mobile communication network 120. This request message contains the shared secret and the IP address of the first client computer 150.

Preferably, steps 206 and 208 are carried out by arranging the first mobile terminal 154 as a "dumb" mobile terminal, whose functionality may be controlled by the first client computer 150 via Bluetooth communication. In this case, the request message is generated by the first client computer 150, and the request command transmitted in step 206 will include the generated request message and actually instruct the first mobile terminal 154 to forward the request message by transmitting the request message as an SMS.

The request message is encrypted using the public key associated with the second mobile terminal 164.

Upon reception of this SMS message, the second mobile terminal 164 will perform the request decryption step 210 of decrypting the request message using the private key associated with the second mobile terminal 164. Advantageously, this private key is stored in the SIM (Subscriber Identity Module) card included in the second mobile terminal. In order to obtain access to the private key stored in the SIM card, the operator of the second mobile terminal 164 will have to enter a PIN code on the mobile terminal 164.

Upon the decrypting of the request message, the second mobile terminal 164 performs the configuration message transmission step 212, wherein configuration data including the IP address of the first client computer 160 and the shared secret are transmitted by the Bluetooth communication to the second client computer 160.

When the second client computer 160 has detected that the configuration message has been received, i.e. when configuration data including both the IP address of the first client computer and the shared secret have been acquired, the second client computer 160 initiates a configuration process 214, configuring the VPN tunnel connection between the first 150 and the second 160 client computers.

Then, the second client computer 160 performs the transmit response command step 216. In this step, a response command is transmitted to the second client computer using the second Bluetooth connection 162.

As a response to the receipt of the response command, the second mobile terminal is arranged to initiate the response message transmission step 218, wherein the second mobile terminal 164 transmits a response message, such as an SMS message, to the first mobile terminal 154, through the mobile communication network 120. This response message contains the IP address of the second client computer 160.

Preferably, steps 216 and 218 are carried out by arranging the second mobile terminal 164 as a "dumb" mobile terminal, whose functionality may be controlled by the second client computer 160 via Bluetooth. In this case, the response message is generated by the second client computer 150, and the response command transmitted in step 216 will include the generated request message and actually instruct the second mobile terminal 164 to forward the request message by transmitting the response message as an SMS.

The response message is encrypted using the private key associated with the second mobile terminal 164, which was stored in its SIM card.

At the first mobile terminal 154, when the response message has been received at step 218, the response message is decrypted in the response decryption step 220. The decryption step 220 essentially correspond to the decrypting step 210 performed by the second mobile terminal 164, as described above.

Subsequent to the decryption step 220, the first mobile terminal 154 performs the configuration message transmission step 222, wherein configuration data including the IP address of the second client computer is transmitted to the first client computer, using the local Bluetooth communication.

The first client computer is thus supplied with the shared secret and the IP address of the second client computer, which enables the first client computer 150 to initiate a VPN tunnel configuring process 224. Also, a configuring process 214 has previously been initiated by the second client computer 160. The completion of both configuring processes 214, 224 enables the establishment of the VPN tunnel between the first 150 and the second 160 client computers.

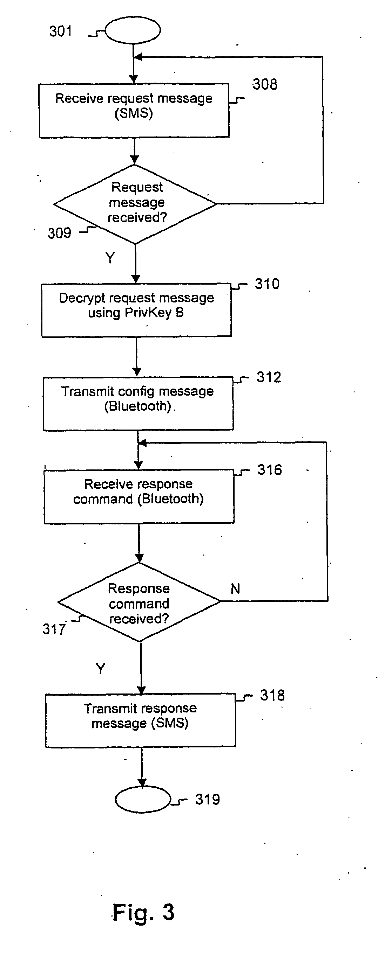

Fig. 3 is a flow chart illustrating a method according to the invention.

The complex process illustrated in fig. 2 comprises steps performed by various parties. The method illustrated in Fig. 3 corresponds to those steps in the above overall process that are performed by the second mobile terminal 164.

The method enables a Virtual Private Network connection, in particular an IPSec tunnel, to be established in a communication network 110 between the first 150 and the second 160 computer connected to the network.

The method is described also with reference to the system illustrated in fig. 1. Thus, a first mobile communication terminal 154 is arranged for local communication (e.g. Bluetooth) with the first 150 computer and a second mobile communication terminal 164 is arranged for local communication (e.g. Bluetooth) with the second 160 computer. Both mobile terminals 154, 164 are also arranged for communication through the mobile telephone network 120.

The second mobile terminal 164 performs the steps of the method. The method starts at reference 301.

First, in the request receiving step 308, an encrypted request message is received. This step corresponds to the request transmission step 208 in fig. 2, wherein the request message was transmitted by the first mobile terminal 154. The request message contains information representing the network address (IP address) of the first computer 150 and the shared secret, which was generated by the first client computer 150 in step 204 and transmitted by local Bluetooth communications to the first mobile terminal 154 in step 206 (cf. fig. 2). The request message is preferably an SMS, transmitted and received by means of the mobile communication network 120. The request message is encrypted with a public key associated with the mobile terminal 164.

The test step 309 ensures that the method continues to the decryption step 310 only when a request message has been received. Otherwise, the method awaits the reception of a request message.

In the decryption step 310, corresponding to the decryption step 210 in fig. 2, the request message is decrypted by the second mobile terminal 164, using the private key associated with the second mobile terminal 164. As explained with reference to fig. 2, this private key is advantageously stored in the SIM card included in the second mobile terminal 164.

Upon the completion of the decryption step 310, the second mobile terminal 164 further performs the configuration message transmission step 312, corresponding to step 212 in fig. 2. At this point, configuration data including the IP address of the first client computer 160 and the shared secret are transmitted by the local Bluetooth communication to the second client computer 160.

Then, the second mobile terminal performs the response command receiving step 316, whose counterpart is the response command transmission step 216 performed by the second client computer, illustrated in fig. 2. In this step 316, a response command is received from the second client computer 160 using the second Bluetooth connection 162.

The test step 317 ensures that the method continues to the response transmission step 318 only when a response command has been received. Otherwise, the method awaits the reception of the response command.

As a response to the receipt of the response command, the second mobile terminal is arranged to initiate the response message transmission step 318, corresponding to step 218 illustrated in fig. 2. In this step 318, the second mobile terminal 164 transmits a response message (an SMS message) to the first mobile terminal 154, through the mobile communication network 120. This response message contains the IP address of the second client computer 160.

Preferably, steps 316 through 318 are achieved by arranging the second mobile terminal 164 as a "dumb" mobile terminal, whose functionality may be controlled by the second client computer 160 via Bluetooth. In this case, the response message is actually generated by the second client computer 150, and the response command transmitted in step 316 will include the generated request message and actually instruct the second mobile terminal 164 to forward the request message by transmitting the response message as an SMS. The response message is encrypted using the private key associated with the second mobile terminal 164, which was stored in its SIM card.

When these steps are completed, at the termination stage 319, the first client computer 150 is enabled to obtain the IP address of the second computer 160 from the first mobile terminal 154, included in the transmitted response message. As illustrated in the overall process in fig. 2, this will involve that the decryption step 220 and the configuration data transmission step 222 are performed by the first mobile terminal 154. Also, the second client computer 160 has been enabled to perform the VPN tunnel configuration step 214 as a result of the configuration message transmitted by the second mobile terminal 164 in step 312.

Consequently, both client computers 150, 160 have obtained the configuration data necessary in order to establish a VPN tunnel between the first 150 and the second 160 computer.

The invention will be particularly applicable if the network 110 supports a global addressing feature, which is the case for the oncoming Internet Protocol specification IPv6. Implementations based on the currently widespread IPv4 involve the use of Network Address Translation (NAT) devices. A disadvantage of NAT networks based on IPv4 is that non-global addresses are used. This means that a computer would send an address that is only valid inside the NAT network, and which cannot be accessed from the outside. An end-to-end communication cannot be obtained, instead, a tunnel could be established between two NAT servers, but then the communication would be completely open inside the NAT network, and thus the security would be compromised.

The above detailed description has explained the invention by way of example. A person skilled in the art will realize that numerous variations and alternatives to the detailed embodiment exist within the scope of the appended claims.

For instance, the first mobile terminal 154 and the first computer 150, which are described as separate units intercommunicating via short-range Bluetooth communication, may be merged into a single mobile unit, such as a Personal Digital Assistant. In this case, the local communication that takes place between the first mobile terminal 154 and the first client computer 150 is performed internally in the mobile unit.

Although Bluetooth communication is specified as the preferred local, short-range communication solution between the client computer (150, 160) and the corresponding mobile terminal (154, 164 respectively), the skilled person will also realize that other options may be employed, such as infrared communication or even wired connection. However, for security purposes, the local communication should preferably provide built-in encryption schemes.

The mobile terminals 154, 164 may be ordinary mobile telephones, such as GSM telephones, provided with additional, short-range communicating means, such as Bluetooth. However, the mobile terminals may also be more complex communication/processing units such as PDAs which include a mobile communication module (e.g. GSM) and e.g. a Bluetooth communication transceiver.

The overall process in fig. 2 is initiated by the user at the first client computer 150. It is of course also possible to initiate the process at the first mobile terminal 154, which then provides a short-range connection to the first client computer 150. It is also possible to rearrange the shared secret generating step 204 to be performed by the first mobile terminal 154. This is particularly relevant if the process is performed by a PDA/phone device which also acts as the client computer.

## Claims

1. Method for enabling a Virtual Private Network connection to be established in a communication network (110) between a first (150) and a second (160) computer connected to the network, wherein a first mobile communication terminal (154) is arranged for local communication with the first (150) computer and a second mobile communication terminal (164) is arranged for local communication with the second (160) computer, **characterized in that** said method is executed by the second mobile terminal (164) and comprises the following steps:
- receiving (308) from the first mobile terminal (154) an encrypted request message comprising
- information representing the network address of the first computer (150) and
- a shared secret,
- decrypting (310) said request message using a private key (PrivKeyB) associated with the second mobile terminal (164),
- transmitting (312) to the second computer (160) a configuration message containing information representing the network address of the first computer (150) and the shared secret,
- receiving (316) a response command from the second computer (160), and
- upon the reception of the response command, transmitting (318) to the first mobile terminal (154) a response message containing information representing the network address of the second (160) computer,
thus enabling the first computer (150) to acquire the network address of the second computer (160), and
further enabling the second computer (160) to acquire the network address of the first computer (150) and the shared secret, which enables the Virtual Private Network connection to be established between the first (150) and the second (160) computer.

2. Method according to claim 1, wherein said private key (PrivKeyB) is stored in a Subscriber Identity Module in the second mobile terminal (164).

3. Method according to claim 2, wherein said response command comprises said response message.

4. Method according to claim 3, wherein said request message is received from a mobile communication network (120), and wherein said response message is transmitted to said mobile communication network (120).

5. Method according to claim 4, wherein said mobile communication network (120) is a GSM compatible mobile telephone network, and wherein said request and response messages are SMS messages.

6. Method according to claim 5, wherein said request message is encrypted using a public key (PubKeyB) associated with the second mobile terminal (164), and wherein said response message is encrypted using the private key (PrivKeyB) associated with the second mobile terminal (164).

7. Method according to one of the claims 1-6, wherein the local communication between the second mobile terminal (164) and the second computer (160) is a short-range, wireless communication implemented according to the Bluetooth specification.

8. Method according to one of the claims 1-7, wherein the local communication between the first mobile terminal (154) and the first computer (150) is a short-range, wireless communication implemented according to the Bluetooth specification.

9. Method according to one of the claims 1-7, wherein the first mobile terminal (154) and the first computer (150) are merged into a single mobile unit, such as a Personal Digital Assistant, said local communication between the first mobile terminal (154) and the first computer (150) being performed internally by a wired connection in the mobile unit.

10. Mobile communication terminal (164) adapted for enabling a Virtual Private Network connection to be established between a first (150) and a second (160) computer in a communication network (110), comprising
- a mobile telephone radio communication arrangement, and
- a communication interface for local communication with a computer,
**characterized in that** the mobile terminal is arranged to perform a method according to one of the claims 1-9.

11. System for enabling a Virtual Private Network connection to be established in a communication network (110), said system comprising a first (150) and a second (160) computer connected to the network (110), wherein a first mobile communication terminal (154) is arranged for local communication with the first (150) computer, and a second mobile communication terminal (164) is arranged for local communication with the second (160) computer,
**characterized in that** the second mobile communication terminal (164) is arranged to perform a method according to one of the claims 1-9.

## Patentansprüche

1. Verfahren, welches die Herstellung einer Virtual Private Network-Verbindung in einem Kommunikationsnetz (110) zwischen einem ersten (150) und einem zweiten (160) mit dem Netz verbundenen Computer ermöglicht, wobei ein erstes mobiles Kommunikationsendgerät (154) für eine lokale Kommunikation mit dem ersten (150) Computer angeordnet ist und ein zweites mobiles Kommunikationsendgerät (164) für eine lokale Kommunikation mit dem zweiten (160) Computer angeordnet ist,
**dadurch gekennzeichnet,**
**dass** das Verfahren von dem zweiten mobilen Endgerät (164) durchgeführt wird und die folgenden Schritte umfasst:
- Empfangen (308) einer verschlüsselten Anforderungsnachricht von dem ersten mobilen Endgerät (154), welche umfasst.
- Informationen, welche die Netzwerkadresse des ersten Computers (150) darstellen, und
- eine gemeinsame Geheiminformation,
- Entschlüsseln (310) der Anforderungsnachricht unter Benutzung eines privaten Schlüssels (PrivKeyB), der dem zweiten mobilen Endgerät (164) zugehörig ist,
- Übertragen (312) einer Konfigurationsnachricht an den zweiten Computer (160), die Informationen enthält, welche die Netzwerkadresse des ersten Computers (150) und die gemeinsame Geheiminformation darstellen,
- Empfangen (316) eines Antwortbefehls von dem zweiten Computer (160) und
- bei Empfang des Antwortbefehls Übertragen (318) einer Antwortnachricht an das erste mobile Endgerät (154), die Informationen enthält, welche die Netzwerkadresse des zweiten (160) Computers darstellen,
wodurch der erste Computer (150) befähigt wird, die Netzwerkadresse des zweiten Computers (160) zu erfassen, und
ferner der zweite Computer (160) befähigt wird, die Netzwerkadresse des ersten Computers (150) und die gemeinsame Geheiminformation zu erfassen, wodurch die Einrichtung der Virtual Private Network-Verbindung zwischen dem ersten (150) und dem zweiten (160) Computer ermöglicht wird.

2. Verfahren nach Anspruch 1, wobei der private Schlüssel (PrivKeyB) in einem Teilnehmeridentifizierungsmodul (Subscriber Identity) Module in dem zweiten mobilen Endgerät (164) gespeichert ist.

3. Verfahren nach Anspruch 2, wobei der Antwortbefehl die Antwortnachricht umfasst.

4. Verfahren nach Anspruch 3, wobei die Anforderungsnachricht von einem Mobilkommunikationsnetz (120) empfangen wird und wobei die Antwortnachricht an das Mobilkommunikationsnetz (120) übertragen wird.

5. Verfahren nach Anspruch 4, wobei das Mobilkommunikationsnetz (120) ein GSMkompatibles Mobiltelefonnetz ist und wobei die Anforderungs- und Antwortnachricht SMS-Nachrichten sind.

6. Verfahren nach Anspruch 5, wobei die Anforderungsnachricht unter Verwendung eines öffentlichen Schlüssels (PubKeyB) verschlüsselt wird, der dem zweiten mobilen Endgerät (164) zugehörig ist, und die Antwortnachricht unter Verwendung des privaten Schlüssels (PrivKeyB) verschlüsselt wird, der dem zweiten mobilen Endgerät (164) zugehörig ist.

7. Verfahren nach einem der Ansprüche 1 bis 6, wobei die lokale Kommunikation zwischen dem zweiten mobilen Endgerät (164) und dem zweiten Computer (160) eine Nahbereich-Funkkommunikation ist, welche gemäß der Bluetooth-Spezifikation implementiert wird.

8. Verfahren nach einem der Ansprüche 1 bis 7, wobei die lokale Kommunikation zwischen dem ersten mobilen Endgerät (154) und dem ersten Computer (150) eine Nahbereich-Funkkommunikation ist, welche gemäß der Bluetooth-Spezifikation implementiert wird.

9. Verfahren nach einem der Ansprüche 1 bis 7, wobei das erste mobile Endgerät (154) und der erste Computer (150) in eine einzelne mobile Einheit wie etwa einen Personal Digital Assistant zusammengeführt werden, wobei die lokale Kommunikation zwischen dem ersten mobilen Endgerät (154) und dem ersten Computer (150) intern durch eine fest verdrahtete Verbindung in der mobilen Einheit durchgeführt wird.

10. Mobiles Kommunikationsendgerät (164), das dazu ausgelegt ist, die Errichtung einer Virtual Private Network-Verbindung zwischen einem ersten (150) und einem zweiten (160) Computer in einem Kommunikationsnetz (110) zu ermöglichen, wobei das mobile Kommunikationsendgerät Folgendes aufweist:
- eine Mobiltelefon-Funkkommunikationsanordnung, und
- eine Kommunikationsschnittstelle für die lokale Kommunikation mit einem Computer,
**dadurch gekennzeichnet,**
**dass** das mobile Endgerät dazu angeordnet ist, ein Verfahren nach einem der Ansprüche 1 bis 9 durchzuführen.

11. System zum Ermöglichen der Herstellung einer Virtual Private Network-Verbindung in einem Kommunikationsnetz (110), wobei das System einen ersten (150) und einen zweiten (160) Computer aufweist, die mit dem Netz (110) verbunden sind, wobei ein erstes mobiles Kommunikationsendgerät (154) für eine lokale Kommunikation mit dem ersten (150) Computer angeordnet ist und ein zweites mobiles Kommunikationsendgerät (164) für eine lokale Kommunikation mit dem zweiten (160) Computer angeordnet ist,
**dadurch gekennzeichnet,**
**dass** das zweite mobile Kommunikationsendgerät (164) dazu angeordnet ist, um ein Verfahren nach einem der Ansprüche 1 bis 9 durchzuführen.

## Revendications

1. Méthode pour permettre qu'une connexion de réseau privé virtuel soit établie dans un réseau de communication (110) entre un premier (150) et un second (160) ordinateur connectés au réseau, dans laquelle un premier terminal de communication mobile (154) est agencé pour une communication locale avec le premier (150) ordinateur et un second terminal de communication mobile (164) est agencé pour une communication locale avec le second (160) ordinateur, **caractérisée en ce que** ladite méthode est exécutée par le second terminal mobile (164) et comprend les étapes suivantes :
- recevoir (308) du premier terminal mobile (154) un message de demande chiffré comprenant
- des informations représentant l'adresse réseau du premier ordinateur (150) et
- un secret partagé,
- déchiffrer (310) ledit message de demande en utilisant une clé privée (PrivKeyB) associée au second terminal mobile (164),
- transmettre (312) au second ordinateur (160) un message de configuration contenant des informations représentant l'adresse réseau du premier ordinateur (150) et le secret partagé,
- recevoir (316) une commande de réponse du second ordinateur (16O), et
- à la réception de la commande de réponse, transmettre (318) au premier terminal mobile (154) un message de réponse contenant des informations représentant l'adresse réseau du second (160) ordinateur,
permettant ainsi au premier ordinateur (150) d'acquérir l'adresse réseau du second ordinateur (160), et
permettant en outre au second ordinateur (160) d'acquérir l'adresse réseau du premier ordinateur (150) et le secret partagé, ce qui permet que la connexion de réseau privé virtuel soit établie entre le premier (150) et le second (160) ordinateur.

2. Méthode selon la revendication 1, dans laquelle ladite clé privée (PrivKeyB) est stockée dans un module d'identité de l'abonné dans le second terminal mobile (164).

3. Méthode selon la revendication 2, dans laquelle ladite commande de réponse comprend ledit message de réponse.

4. Méthode selon la revendication 3, dans laquelle ledit message de demande est reçu d'un réseau de communication mobile (120), et dans laquelle ledit message de réponse est transmis audit réseau de communication mobile (120).

5. Méthode selon la revendication 4, dans laquelle ledit réseau de communication mobile (120) est un réseau de téléphonie mobile compatible GSM, et dans laquelle lesdits messages de demande et de réponse sont des messages SMS.

6. Méthode selon la revendication 5, dans laquelle ledit message de demande est chiffré en utilisant une clé publique (PubKeyB) associée au second terminal mobile (164), et dans laquelle ledit message de réponse est chiffré en utilisant la clé privée (PrivKeyB) associée au second terminal mobile (164).

7. Méthode selon une des revendications 1 à 6, dans laquelle la communication locale entre le second terminal mobile (164) et le second ordinateur (160) est une communication sans fil à courte distance mise en oeuvre selon la spécification Bluetooth.

8. Méthode selon une des revendications 1 à 7, dans laquelle la communication locale entre le premier terminal mobile (154) et le premier ordinateur (150) est une communication sans fil à courte distance mise en oeuvre selon la spécification Bluetooth.

9. Méthode selon une des revendications 1 à 7, dans laquelle le premier terminal mobile (154) et le premier ordinateur (150) sont fusionnés en une seule unité mobile, comme un assistant numérique personnel, ladite communication locale entre le premier terminal mobile (154) et le premier ordinateur (150) étant effectuée de manière interne par une connexion câblée dans l'unité mobile.

10. Terminal de communication mobile (164) adapté pour permettre qu'une connexion de réseau privé virtuel soit établie entre un premier (150) et un second (160) ordinateur dans un réseau de communication (110), comprenant :
- un agencement de communication radio téléphonique mobile, et
- une interface de communication pour une communication locale avec un ordinateur,
**caractérisé en ce que** le terminal mobile est agencé pour effectuer une méthode selon une des revendications 1 à 9.

11. Système pour permettre qu'une connexion de réseau privé virtuel soit établie dans un réseau de communication (110), ledit système comprenant un premier (150) et un second (160) ordinateur connectés au réseau (110), dans lequel un premier terminal de communication mobile (154) est agencé pour une communication locale avec le premier (150) ordinateur, et un second terminal de communication mobile (164) est agencé pour une communication locale avec le second (160) ordinateur,
**caractérisé en ce que** le second terminal de communication mobile (164) est agencé pour effectuer une méthode selon une des revendications 1 à 9.
